# EUROPEAN PATENT APPLICATION

(11) **EP 4 776 630 A1**
(43) Date of publication of application: **15.07.2026**
(21) Application number: 24862099.9
(22) Date of filing: 06.09.2024
(51) Int. Cl.: H04N 21/431

(54) **PAGE DISPLAY METHOD AND APPARATUS, DEVICE, AND STORAGE MEDIUM**

(30) Priority: 07.09.2023 CN 202311153253
(71) Applicant: BEIJING YOUZHUJU NETWORK TECHNOLOGY CO. LTD., Beijing 101299 (CN)
(72) Inventor: WANG, Li, Beijing 100028 (CN); DONG, Shihan, Beijing 100028 (CN); XIE, Zhiyao, Beijing 100028 (CN); ZHAO, Mengjie, Beijing 100028 (CN)
(74) Representative: Grünecker Patent- und Rechtsanwälte PartG mbB
(86) International application number: PCT/CN2024/117575
(87) International publication number: WO 2025/051261

(57) **Abstract**

The embodiment of the disclosure provides a method, apparatus, electronic device and storage medium for page display. The method includes: displaying a live streaming page corresponding to a first account; displaying, in response to a first operation, first object display information corresponding to the first account in the live streaming page corresponding to the first account; displaying, in response to a second operation, second object display information corresponding to the second account in the live streaming page corresponding to the first account. According to the subject matter provided by the embodiment of the disclosure, the mutual exchange of recommended objects between a plurality of live streaming rooms is realized, so that the technical effect of improving service conversion rate is achieved.

## Description

This application claims priority to Chinese Patent Application No. 202311153253.8 filed on September 07, 2023, and entitled "METHOD, APPARATUS, ELECTRONIC DEVICE AND STORAGE MEDIUM FOR PAGE DISPLAY", the disclosures of which are incorporated herein by reference in their entireties.

### FIELD

Embodiments of the present disclosure relate to the field of computer technologies, in particular to a method, apparatus, electronic device and storage medium for page display.

### BACKGROUND

With the continuous development of network technologies, more and more users meet their demand of obtaining items via the Internet, for example, by obtaining corresponding items on platforms that can provide live streaming. That is, live streaming users may list a plurality of items in a live streaming room for other users to consume.

However, in a process of watching the live streaming, only items live streamed by the current live streaming user can be seen, and usually the items live streamed by one streamer are relatively single, and user requirement is difficult to meet. Further, in a live streaming process of the streamer, there is an issue of poor interactivity with live streaming users in other live streaming rooms.

### SUMMARY

The present disclosure provides a method, apparatus, electronic device and storage medium for page display, and aims to realize the technical effect of mutual exchange of recommended objects between a plurality of live streaming rooms.

In a first aspect, embodiments of the present disclosure provide a method of page display, comprising:
displaying a live streaming page corresponding to a first account, where, the live streaming page comprises a live video stream corresponding to the first account and a live video stream stream corresponding to at least one second account, and the first account and the second account are in a connected state;
displaying, in response to a first operation, first object display information corresponding to the first account in the live streaming page corresponding to the first account, where, the first object display information comprises at least one first recommended display object corresponding to the first account;
displaying, in response to a second operation, second object display information corresponding to the second account in the live streaming page corresponding to the first account, where, the second object display information comprises at least one second recommended display object corresponding to the second account.

In a second aspect, embodiments of the present disclosure further provide an apparatus for page display, comprising:
a live streaming page displaying module configured to display a live streaming page corresponding to a first account, where, the live streaming page comprises a live video stream corresponding to the first account and a live video stream stream corresponding to at least one second account, and the first account and the second account are in a connected state;
a first object display information displaying module configured to display, in response to a first operation, first object display information corresponding to the first account in the live streaming page corresponding to the first account, where, the first object display information comprises at least one first recommended display object corresponding to the first account;
a second object display information displaying module configured to display, in response to a second operation, second object display information corresponding to the second account in the live streaming page corresponding to the first account, where, the second object display information comprises at least one second recommended display object corresponding to the second account.

In a third aspect, embodiments of the present disclosure further provide an electronic device, the electronic device comprises:
one or more processors;
a storage device, configured to store one or more programs;
when the one or more programs are executed by the one or more processors, causing the one or more processors to implement the method of page display according to any of the embodiments of the present disclosure.

In a fourth aspect, embodiments of the present disclosure further provide a storage medium comprising computer-executable instructions, the computer-executable instructions, when executed by a computer processor, implementing the method of page display according to any of the embodiments of the present disclosure.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and components and elements are not necessarily drawn to scale.
FIG. 1 illustrates a schematic flowchart of a method of page display according to embodiments of the present disclosure;
FIG. 2 illustrates a schematic diagram of a live streaming page corresponding to a first account according to embodiments of the present disclosure;
FIG. 3 illustrates a schematic flowchart of a method of page display according to embodiments of the present disclosure;
FIG. 4 illustrates a schematic diagram of a first display page according to embodiments of the present disclosure;
FIG. 5 illustrates a schematic diagram of a second display page according to embodiments of the present disclosure;
FIG. 6 illustrates a schematic diagram of an information switching control according to embodiments of the present disclosure;
FIG. 7 illustrates a schematic diagram corresponding to complete display of a first display page and partial display of a second display page according to embodiments of the present disclosure;
FIG. 8 illustrates a schematic diagram corresponding to complete display of a second display page and partial display of a first display page according to embodiments of the present disclosure;
FIG. 9 illustrates a schematic diagram of a page switching control according to embodiments of the present disclosure;
FIG. 10 illustrates a schematic diagram of a page return control according to embodiments of the present disclosure;
FIG. 11 illustrates a schematic structural diagram of an apparatus for page display according to embodiments of the present disclosure;
FIG. 12 illustrates a schematic structural diagram of an electronic device according to embodiments of the present disclosure.

### DETAILED DESCRIPTION

Embodiments of the present disclosure will be described in more detail below with reference to the accompanying drawings. While certain embodiments of the present disclosure are shown in the drawings, it should be understood that the present disclosure may be implemented in various forms, and should not be construed as limited to the embodiments set forth herein, and vice versa. It should be understood that the drawings and embodiments of the present disclosure are only for the purpose of example and are not intended to limit the scope of the present disclosure.

It should be understood that the steps recited in the method embodiments of the present disclosure may be performed in different orders, and/or in parallel. Further, the method embodiments may include additional steps and/or omit performing the illustrated steps. The scope of the present disclosure is not limited in this respect.

As used herein, the term "include" and variants thereof are open-ended, i.e., "including but not limited to". The term "based on" is "based at least in part on". The term "an embodiment" means "at least one embodiment"; the term "another embodiment" means "at least one further embodiment"; the term "some embodiments" means "at least some embodiments". The relevant definitions of other terms will be given below.

It should be noted that the concepts such as "first" and "second" mentioned in the present disclosure are merely used to distinguish different apparatuses, modules, or units, and are not intended to limit the order of functions performed by these apparatuses, modules, or units, or to limit their mutual dependency relationships.

It should be noted that the modification of "a" and "a plurality" mentioned in the present disclosure is illustrative and not limiting, and those skilled in the art should understand that "one or more" should be understood unless the context clearly indicates otherwise.

The names of messages or information exchanged between a plurality of apparatuses in embodiments of the present disclosure are only for the purpose of example and are not intended to limit the scope of such messages or information.

It can be understood that, before using subject matters disclosed in the embodiments of the present disclosure, the types, the usage scope, the usage scenario of personal information, and the like that may related to the present disclosure should be notified to the user in an appropriate manner according to the relevant laws and regulations, and the authorization of the user is obtained.

For example, in response to receiving an active request from a user, prompt information is sent to the user to explicitly prompt the user that the requested operation will need to obtain and use personal information of the user. Therefore, the user can autonomously decide, according to the prompt information, whether to provide the personal information to the software or hardware executing the operations of the subject matter of the present disclosure, such as the electronic device, application, server or storage medium, and the like.

As an alternative but non-limiting implementation, in response to receiving the active request of the user, the manner of sending the prompt information to the user may be, for example, a pop-up window with the prompt information presented in text. In addition, the pop-up window may further include a selection control for the user to select "agree" or "not agree" to provide personal information to the electronic device.

It may be understood that the foregoing notification and obtaining a user authorization process is merely illustrative and does not constitute a limitation on implementations of the present disclosure, and other manners of meeting related laws and regulations may also be applied to implementations of the present disclosure.

It may be understood that the data involved in the subject matter (including but not limited to the data itself, the acquisition or use of the data) should comply with the requirements of corresponding laws and regulations and related regulations.

Before introducing the subject matter, application scenarios may be described first. The subject matter of the embodiments of the present disclosure is applied to the scenario with network communication and data interaction between any two terminal devices or a plurality of terminal devices, where the plurality of terminals may be terminal devices or may be corresponding accounts that can implement the communication. That is, the plurality of terminal devices may be connected via voice, and at this time, the connection via voice is mainly to synchronize multimedia data streams. When information associated with another live streaming room needs to be viewed, it is necessary to exit the current live streaming room and then trigger entering the other live streaming room(s) to operate, so as to view the information associated with the other live streaming room(s). At this time, there is trivial and complex interactive operations, resulting in a situation that the user does not enter other live streaming room(s), so that there is reduction of item conversion rate and traffic conversion rate. In order to solve the above issues, the subject matter provided by the embodiments of the present disclosure may be used to realize mutual exchange of recommended objects between live streaming rooms, thereby improving item conversion rate.

Before describing the subject matter, it should be noted that an apparatus for performing the method of page display provided in the embodiments of the present disclosure may be integrated into the application software that supports the functions of page display and data interaction, and the software may be installed in an electronic device. Optionally, the electronic device may be a mobile terminal or a PC terminal. The application software may be a type of software for data interaction, and the specific examples of such application software are not described herein again, as long as the data interaction may be implemented therein. The application software may also be a specially developed application, and integrated in the software implementing interaction, or integrated in a corresponding page, so that the user may perform interaction via an integrated page of the PC terminal.

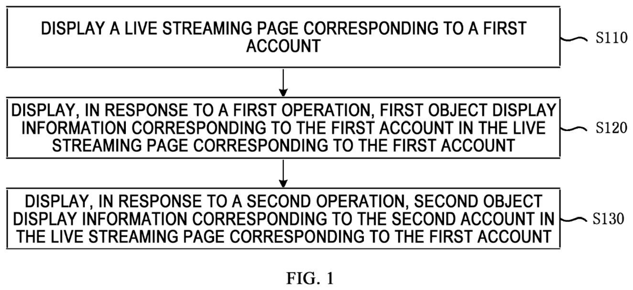

FIG. 1 illustrates a schematic flowchart of a method of page display according to embodiments of the present disclosure. Embodiments of the present disclosure are applicable to any scene that needs to display mutual exchange of objects. Optionally, displaying mutual exchange of objects can be realized in a live streaming scene. During a video call, corresponding display object link can be displayed to realize the scene of displaying mutual exchange of objects. The method can be performed by an apparatus for page display, which can be realized in the form of software and/or hardware. Optionally, it can be realized via an electronic device, which can be mobile terminal, PC terminal or server, and the like.

As shown in FIG. 1, the method includes:
S110: a live streaming page corresponding to a first account is displayed.

Herein, the live streaming page includes a live video stream corresponding to the first account and a live video stream stream corresponding to at least one second account, and the first account and the second account are in a connected state.

Herein, the live streaming page may be an image presented in a display interface to which a viewing end of the live streaming belongs. Both the first account and the second account may be understood as users registered in the application software with the live streaming function. The first account and the second account may be accounts corresponding to different registered terminals. The live video stream may be understood as a corresponding multimedia data stream in the live streaming process, that is, a live streaming image. The connected state may be understood as a corresponding state when a communication connection is established between a plurality of accounts. In practical application, any account may send a connection request to at least one account that wants to connect with, and establish a connection relationship between the plurality of accounts when receiving feedback data of accepting the request fed back by the account, so that the plurality of accounts are in a connected state.

Herein, the connection request may be understood as a request for establishing a communication connection with other device(s) and performing data interaction. The other device(s) may be an electronic device that supports application software with the connection function. Optionally, the application software may be a type of software that supports a connection function, and the specific examples of such application software are not described herein again, as long as the connection function may be implemented therein. The application software may include a live streaming function, and correspondingly, a plurality of users may be registered based on this function, to obtain an account corresponding to each user.

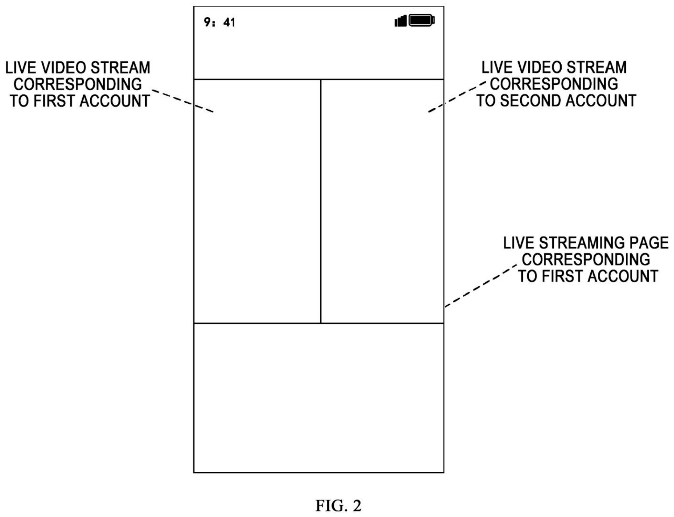

In the embodiments of the present disclosure, the connection request may be initiated based on the first account, or may be initiated by the second account, and specific initiator of the connection request and the way of how to initiate the connection request may be not limited herein, as long as the connection may be implemented. It should be further noted that the number of second accounts may be one or more. No matter whether the number of second accounts is one or more, as long as the communication is established, the live video stream corresponding to the first account and the live video stream corresponding to each second account may be displayed in the live streaming page corresponding to the first account. For example, as shown in FIG. 2, the live streaming page corresponding to the first account is illustrated. It can be seen from FIG. 2 that the number of the second accounts may be one. The left area of the live streaming page may be used as a display area for the live video stream corresponding to the first account, and the right area of the live streaming page is used as a display area for the live video stream corresponding to the second account.

It should be noted that, in addition to display areas corresponding to live video streams, the live streaming page corresponding to the first account may further include an information posting area, and the live streaming interaction information may be displayed in this area.

In practical application, establishing the connection relationship may be: displaying, in the live streaming page corresponding to the first account, at least one account identifier that may be interacted with, and initiating, based on a trigger operation on the account identifier, a request for establishing a connection relationship with other accounts. The displayed account identifier may be an account associated with the first account, or may be an account with a relatively high popularity, or may be an account manually selected by a user to which the first account belongs.

In practical application, a user list display control may be preset. When a trigger operation on the control is detected, identification information corresponding to at least one account to be interacted may be displayed based on the live streaming page corresponding to the first account, and selection on the identification information displayed in the display interface via the trigger operation may be performed. When a trigger operation on any identification information is detected, a connection request may be initiated to an account to be interacted corresponding to the identification information. Further, when the account to be interacted receives the connection request, a connection query page corresponding to the connection request may be popped up on the live streaming page corresponding to the account to be interacted, and the connection query page may include an acceptance request control, a rejection request control, and identification information corresponding to the first account initiating the connection request. The user to which the account to be interacted belongs may perform selection on the controls included in the connection query page via a trigger operation. Further, in response to a trigger operation on a control included in the connection query page, response data corresponding to the connection request may be generated and fed back to the first account initiating the connection request. Further, in a case that the response data corresponding to the connection request is accepting the connection, communication between the first account and the at least one second account may be established, and the live video stream corresponding to the first account and the live video stream corresponding to each second account are displayed in the live streaming page corresponding to the first account.

It should be noted that, in the live streaming page corresponding to the first account, the live video streams corresponding to the plurality of accounts are displayed, and their display forms may be diverse. Optionally, the display size of the live video stream corresponding to the first account in the live streaming page is adjusted, and the live video stream corresponding to the at least one second account is displayed at a preset position of the live streaming page. For example, the preset position may be any position in the live streaming page. Optionally, the preset position may be a left side, a right side, or a bottom of the adjusted live video stream corresponding to the first account; or, based on the total number of the first account and the second account, the live streaming page is divided into a plurality of areas, and each area has the live video stream corresponding to its corresponding account displayed therein; or, the live video stream corresponding to the first account is displayed in a large screen area, and the live video stream corresponding to the at least one second account is displayed in a small screen area, so that the live video streams corresponding to the first video stream and the at least one second account are displayed in the live streaming page corresponding to the first account. where the large screen area and the small screen area are relative to each other. In this way, the live video stream corresponding to other accounts are floated displayed over the live video stream corresponding to the current account to achieve the effect of simultaneously browsing a plurality of live streaming images. In accordance with a detection that a floated live video stream is triggered, the live video stream displayed on the display interface is switched, so that the triggered live video stream is displayed in a large screen area.

S120: in response to a first operation, first object display information corresponding to the first account is displayed in the live streaming page corresponding to the first account.

Herein, the first operation may be an operation that triggers displaying of the first object display information. The first operation includes a trigger operation on presenting object display information on the live streaming page. The first object display information may be object display information corresponding to the first account. The first object display information may include at least one first recommended display object corresponding to the first account. The first recommended display object may be a to-be-consumed object associated with the first account. Optionally, the first recommended display object may be an entity object, such as a live streaming item, or maybe a virtual object, such as an item coupon. In practical application, the user may consume any consumable first recommended display object that is displayed in the live streaming page, to cause transfer of the ownership of the first recommended display object.

It should be noted that the first object display information may further include object introduction information and value information corresponding to each first recommended display object.

In the embodiments of the present disclosure, an object display control may be preset in the live streaming page, and a trigger operation on the control may be considered as the first operation. Optionally, an operation corresponding to any other manner may also be used as the first operation, which is not specifically limited in the embodiments of the present disclosure.

In practical application, when the first operation is detected, the first operation may be responded with the first object display information corresponding to the first account being displayed in the live streaming page corresponding to the first account.

It should be noted that a display form of the first object display information in the live streaming page may be a pop-up window display. Optionally, the first object display information may also be displayed on an upper layer of the live streaming page, that is, displayed on an upper layer covering the live streaming page; or maybe any other display form, which is not specifically limited in the embodiments of the present disclosure.

S130: in response to a second operation, second object display information corresponding to the second account is displayed in the live streaming page corresponding to the first account.

Herein, the second object display information includes at least one second recommended display object corresponding to the second account. The second recommended display object may be a to-be-consumed object associated with the second account. Optionally, the second recommended display object may be an entity object, for example, a live streaming item, or maybe a virtual object, for example, an item coupon. It should be noted that the second object display information may further include object introduction information and value information corresponding to each second recommended display object.

In the embodiments of the present disclosure, the second operation may be an operation that triggers displaying of the second object display information. The second operation includes an operation that triggers switching controls. The switching controls may be controls for switching object display information. The switching controls may include a plurality of switching controls, and the number of switching controls matches the number of accounts in the connected state. For example, if there is a connected state between the first account and one second account, the number of switching controls is 2. The display content presented by each switching control is a first identifier or a second identifier, where the first identifier corresponds to the first account, and the second identifier corresponds to the second account. The first identifier may be an identifier representing identity information of a user to which the first account belongs. The second identifier may be an identifier representing identity information of a user to which the second account belongs. The first identifier and the second identifier may both be identifiers in any form, and optionally, may be account user avatars and/or account user nicknames.

In the embodiments of the present disclosure, the switching control may be preset in the live streaming page, and the switching control may be displayed in the live streaming page corresponding to any account when the plurality of accounts are in connected state. Herein, a setting position of the switching control may be any position in the live streaming page, and optionally, may be a top position in an area to which the first object display information belongs; or may be a top position adjacent to an area to which the first object display information belongs; or may be a floating display switching control on an upper layer of the display page to which the first object display information belongs.

In practical application, in a case that the first account and the at least one second account are in a connected state, for the first account, second object display information corresponding to the second account may be obtained, and then, in accordance with a detection of the second operation, the operation may be responded with the second object information corresponding to the second account being displayed in the live streaming page corresponding to the first account.

In practical application, when the first object display information corresponding to the first account is displayed in the live streaming page, a plurality of switching controls may also be displayed in the live streaming page, and the display content corresponding to each control may be the first identifier corresponding to the first account or the second identifier corresponding to the second account. The user may select among the plurality of displayed selectable switching controls via a trigger operation, and further, in accordance with a detection of a trigger for any switching control, it may be determined that the second operation is detected, and the second operation is responded, and a second account corresponding to the switching control is determined. Further, the second object display information corresponding to the second account may be displayed in the live streaming page corresponding to the first account.

It should be noted that, for each switching control shown in the live streaming page, when object display information corresponding to the current switching control is displayed in the live streaming page, and a trigger operation on the current switching control is detected again, the trigger operation may not be responded, that is, the live streaming page maintains the current display state. As an alternative, the trigger operation may be responded, and the currently displayed object display information in the live streaming page is refreshed, and then the refreshed object display information is displayed, which is not specifically limited in the embodiments of the present disclosure.

In the embodiments of the present disclosure, when the object display information corresponding to other accounts is synchronized to the current account, a pop-up reminder may also be provided in the live streaming page corresponding to the current account, for example, prompt information that object display information corresponding to other accounts has been pulled is reminded.

According to the subject matter of the embodiments of the present disclosure, a live streaming page corresponding to a first account is displayed. Further, in response to a first operation, first object display information corresponding to the first account is displayed in the live streaming page corresponding to the first account. Finally, in response to a second operation, second object display information corresponding to a second account is displayed in the live streaming page corresponding to the first account. In this way, the following issues can be solved: in the related technology, the users can only view items live streamed by the current live streaming user, which is difficult to satisfy the user demands; and in the live streaming process of the live streaming user, it lacks interactivity with live streaming users of other live streaming rooms. By solving those issues, it enables the mutual exchange of recommended objects between a plurality of live streaming rooms, so that the technical effect of improving service conversion rate is achieved.

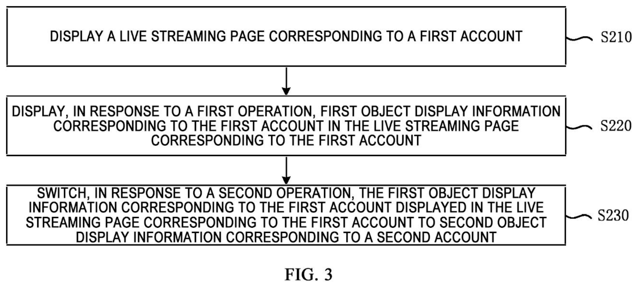

FIG. 3 illustrates a schematic flowchart of a method of page display according to embodiments of the present disclosure. Based on the above embodiments, in accordance with a detection of the second operation, the first object display information corresponding to the first account displayed in the live streaming page corresponding to the first account can be switched to the second object display information corresponding to the second account. Specific implementations can be seen in the description of the embodiments of the present disclosure. Herein, technical features that are the same as or similar to the foregoing embodiments are not described herein again.

As shown in FIG. 3, the method of this embodiment may specifically include:
S210: a live streaming page corresponding to a first account is displayed.

S220: in response to a first operation, first object display information corresponding to the first account is displayed in the live streaming page corresponding to the first account.

S230: in response to a second operation, the first object display information corresponding to the first account displayed in the live streaming page corresponding to the first account is switched to second object display information corresponding to a second account.

Herein, the first object display information corresponding to the first account is displayed via a first display page, and the first display page is displayed in the live streaming page corresponding to the first account; the second object display information corresponding to the second account is displayed via a second display page, and the second display page is displayed in the live streaming page corresponding to the second account.

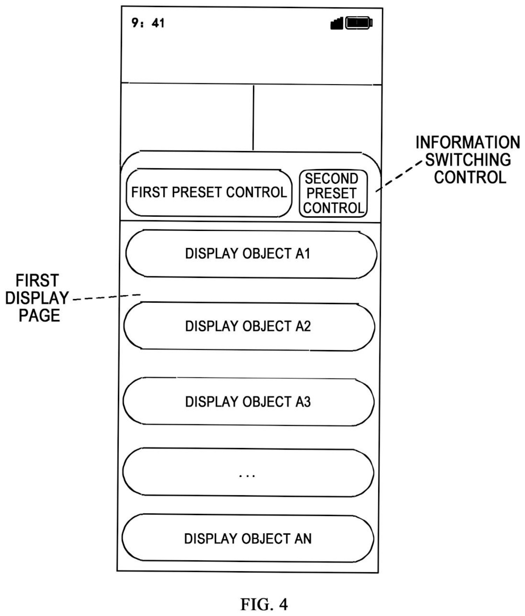

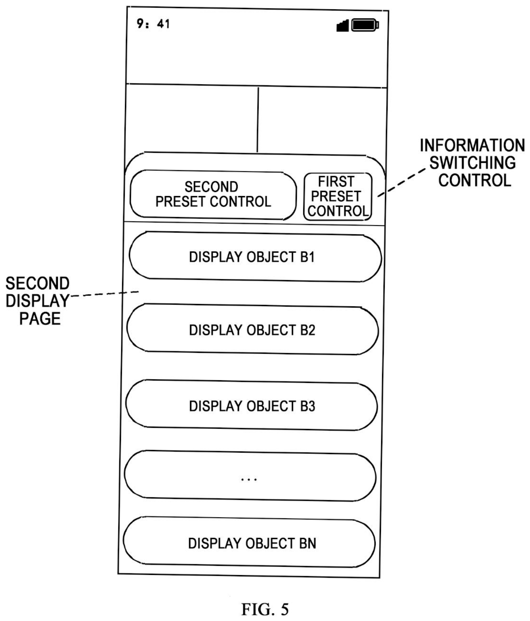

In the embodiments of the present disclosure, the first display page may be displayed in the live streaming page corresponding to the first account. The first display page may be a page for displaying the first object display information corresponding to the first account. For example, as shown in FIG. 4, a schematic diagram of a first display page is illustrated. It can be seen from FIG. 4 that the first display page may include N first recommended display objects corresponding to the first account, which are display object A1, display object A2, display object A3, . . ., display object AN, respectively. The second display page may be displayed in the live streaming page corresponding to the first account. The second display page may be a page for displaying the second object display information corresponding to the second account. For example, as shown in FIG. 5, a schematic diagram of a second display page is illustrated. It can be seen from FIG. 5 that the second display page may include N second recommended display objects corresponding to the second account, which are display object B1, display object B2, display object B3, . . ., display object BN, respectively.

In the embodiments of the present disclosure, an information switching control may be preset to determine a detection of the second operation in accordance with a detection of a trigger operation on the information switching control, and then the second operation may be responded, and the first object display information corresponding to the first account displayed in the live streaming page corresponding to the first account is switched to the second object display information corresponding to the second account.

Alternatively, switching the first object display information corresponding to the first account displayed in the live streaming page corresponding to the first account to the second object display information corresponding to the second account in response to the second operation includes: switching, in response to a trigger operation on the information switching control, the first object display information corresponding to the first account displayed in the live streaming page corresponding to the first account to the second object display information corresponding to the second account.

Herein, the information switching control may be a control capable of switching to display the object display information corresponding to a plurality of accounts.

In the embodiments of the present disclosure, the information switching control may be set at any position in the live streaming page, and for the information switching control set at different positions, the corresponding control types and control display contents may be the same or different. The following may separately describe positions, types, display contents, and changes before and after triggering of the information switching control in different situations.

A situation may be that: the first display page and/or the second display page further includes the information switching control which includes: a first preset control for triggering displaying of the first object display information corresponding to the first account in the live streaming page corresponding to the first account, and a second preset control for triggering displaying of the second object display information corresponding to the second account in the live streaming page corresponding to the first account.

Herein, the information switching control may be set at any position of the first display page and/or the second display page. Optionally, the information switching control may be set in a page top area of the first display page and/or the second display page. The first preset control may be a control for displaying the first object display information corresponding to the first account in the live streaming page corresponding to the first account after triggering. The first preset control may be any type of control, and optionally, may be a button. The second preset control may be a control for displaying second object display information corresponding to the second account in the live streaming page corresponding to the first account after triggering. The second preset control may be any type of control, and optionally, may be a button. For example, FIG. 4 or FIG. 5 shows a schematic diagram of the information switching control.

In practical application, when the first object display information corresponding to the first account is displayed in the live streaming page corresponding to the first account, in accordance with a detection of a trigger operation on the second preset control of the information switch control, the trigger operation is responded, and then the first object display information corresponding to the first account displayed in the live streaming page corresponding to the first account is switched to the second object display information corresponding to the second account. Then, in accordance with a detection of a trigger operation on the first preset control of the information switch control, the trigger operation is responded, and then the second object display information corresponding to the second account displayed in the live streaming page corresponding to the first account is switched to the first object display information corresponding to the first account.

In practical application, control display content of the first preset control and control display content of the second preset control are associated with the accounts to which the object display information displayed in the live streaming page corresponding to the first account belongs.

Alternatively, in response to the object information displayed in the live streaming page corresponding to the first account being the first object display information corresponding to the first account, the first preset control displays account information, attribute information, and a preset interaction control corresponding to the first account. The second preset control displays account information and a switching button corresponding to the second account.

Herein, the account information may be information representing identity information of a user to which an account belongs. Optionally, the account information may include an account avatar and/or an account nickname. The attribute information may be information representing the account in recommended display object. Optionally, the attribute information may include an account score and an account level. The preset interaction control may be an entry control capable of implementing user interaction operations. Optionally, the preset interaction control may include an account detail display control and a to-be-consumed object list display control corresponding to the user. The switching button may be a control for switching display object display information in the live streaming page corresponding to the first account after triggering.

In practical application, in response to the object information displayed in the live streaming page corresponding to the first account being the first object display information corresponding to the first account, the information switching control may be displayed in the first display page. The first preset control of the displayed information switching control displays account information, attribute information, and a preset interaction control corresponding to the first account. The second preset control displays account information and a switching button corresponding to the second account. For example, with continued reference to FIG. 4, FIG. 4 illustrates a corresponding schematic diagram where the object information displayed in the live streaming page corresponding to the first account is the first object display information corresponding to the first account.

It should be noted that, in order to meet personalized requirements of the user, and meanwhile clearly and intuitively allow the user to know which account the currently browsed object display information is corresponding to, and the first preset control can be distinctively displayed from the second preset control. For example, the display size of the first preset control is greater than the display size of the second preset control; and/or the first preset control is displayed at a target position of the information switching control. Herein, the target position may be any position in the information switching control. Optionally, the target position may be a first position, or an intermediate position, or any obvious protruding position in the information switching control, which is not specifically limited in the embodiments of the present disclosure.

In practical application, in accordance with a detection of a trigger operation on the switching button displayed in the second preset control from the user, the trigger operation is responded. The display position and the display content of the first preset control and the second preset control may be switched. The first object display information corresponding to the first account displayed in the live streaming page corresponding to the first account is switched to the second object display information corresponding to the second account.

Alternatively, in response to the object information displayed in the live streaming page corresponding to the first account being the second object display information corresponding to the second account, the second preset control displays account information, attribute information, and a preset interaction control corresponding to the second account. The first preset control displays account information and a switching button corresponding to the first account.

In practical application, in response to the object information displayed in the live streaming page corresponding to the first account being the first object display information corresponding to the second account, the second display page may display information switching control. The second preset control of the displayed information switching control displays account information, attribute information, and a preset interaction control corresponding to the second account. The first preset control displays account information and a switching button corresponding to the first account. For example, with continued reference to FIG. 5, FIG. 5 illustrates a corresponding schematic diagram where the object information displayed in the live streaming page corresponding to the first account is the second object display information corresponding to the second account.

A second situation may be that: the information switching control is set in a display area adjacent to a page of the first display page and the second display page in the live streaming page corresponding to the first account; and the information switching control displays a user identifier of the first account and a user identifier of the second account.

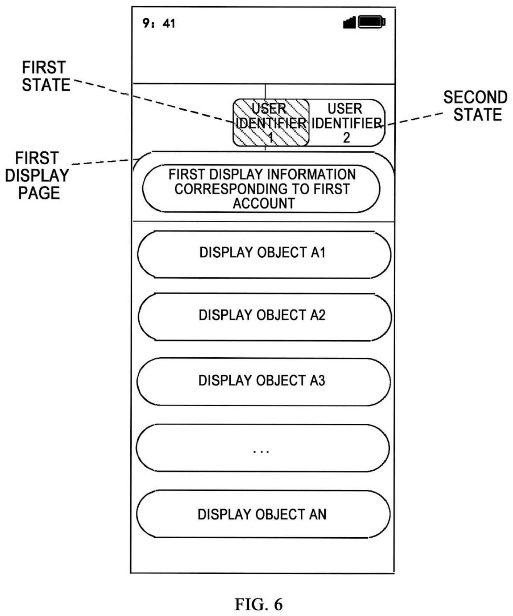

In the embodiments of the present disclosure, the live streaming page corresponding to the first account may simultaneously display the first display page and the second display page. In this case, the information switching control may be set in a display area adjacent to the page of the first display page and the page of the second display page. The information switching control may be any type of control, and optionally, may be a tag card switching control. The user identifier of the first account is used to trigger displaying of the first object display information corresponding to the first account in the live streaming page corresponding to the first account. The user identifier of the second account is used to trigger displaying of the second object display information corresponding to the second account in the live streaming page corresponding to the first account. Optionally, the user identifier may include a user avatar and/or a user nickname. For example, as shown in FIG. 6, a schematic diagram of an information switching control is illustrated. It is assumed that the user identifier 1 is a user identifier of the first account, and the user identifier 2 is a user identifier corresponding to the second account.

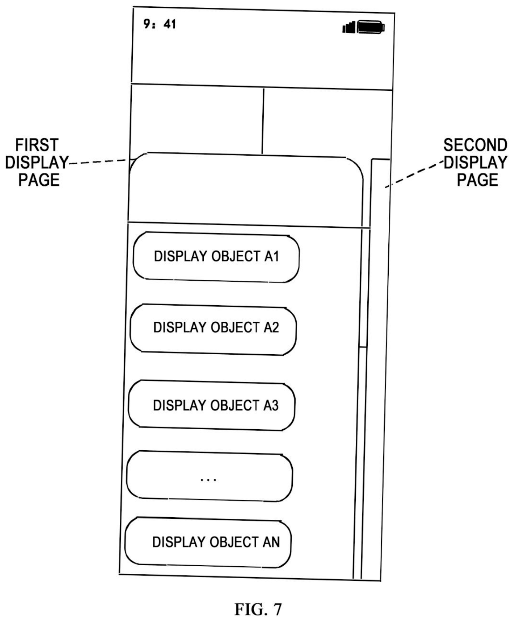

In practical application, the first display page and the second display page may be simultaneously displayed in the live streaming page corresponding to the first account. The information switching control may be set in a display area adjacent to the page of the first display page and the second display page. In accordance with a detection of a trigger operation on the user identifier corresponding to the first account in the information switching control, the first display page may be completely displayed in the live streaming page corresponding to the first account, and the second display page may be partially displayed in the live streaming page corresponding to the first account. For example, as shown in FIG. 7, FIG. 7 illustrates a schematic diagram corresponding to a complete display of the first display page and a partial display of the second display page.

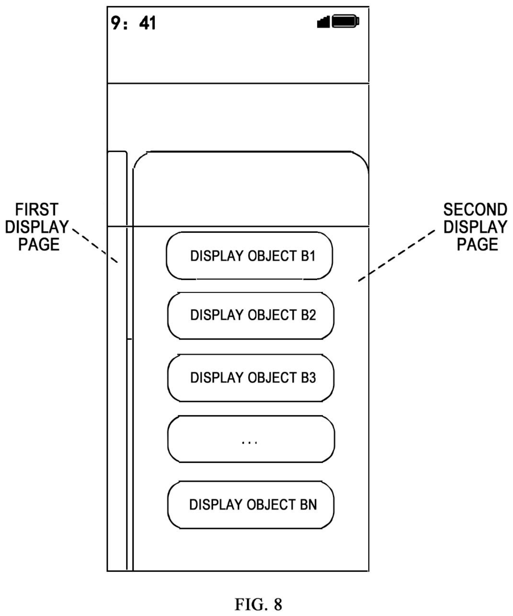

Further, in accordance with a detection of a trigger operation on the user identifier corresponding to the second account in the information switching control, the second display page may be completely displayed in the live streaming page corresponding to the first account, and the first display page is partially displayed in the live streaming page corresponding to the first account. For example, as shown in FIG. 8, FIG. 8 illustrates a schematic diagram corresponding to a complete display of the second display page and a partial display of the first display page.

In practical application, a display state of the user identifier of the first account and a display state of the user identifier of the second account are associated with accounts to which the object display information displayed in the live streaming page corresponding to the first account belongs.

Alternatively, in response to the object information displayed in the live streaming page corresponding to the first account being the first object display information corresponding to the first account, the display state of the user identifier of the first account is a first state, and the display state of the user identifier of the second account is a second state.

The first state may be any state, and optionally, may be a highlighted state. The second state may be any state, and optionally, may be an unhighlighted state.

In practical application, in response to the object display information displayed in the live streaming page corresponding to the first account being the first object display information corresponding to the first account, the display state of the user identifier of the first account is the first state, and the display state of the user identifier of the second account is the second state. For example, with continued reference to FIG. 6, FIG. 6 illustrates a schematic diagram where the user identifier of the first account and the user identifier of the second account are displayed.

Alternatively, in response to the object information displayed in the live streaming page corresponding to the first account being the second object display information corresponding to the second account, the display state of the user identifier of the first account is the second state, and the display state of the user identifier of the second account is the first state.

In practical application, in a case that the object display information displayed in the live streaming page corresponding to the first account is the first object display information corresponding to the first account, in accordance with a detection of a trigger operation on the information switch control, the object display information displayed in the live streaming page corresponding to the first account may be switched from the first object display information corresponding to the first account to the second object display information corresponding to the second account. Meanwhile, the user identifier of the first account may be switched from the first state to the second state, and the user identifier of the second account is switched from the second state to the first state.

A third situation may be that the information switching control is a floating control.

The floating control may be set at any position in the live streaming page corresponding to the first account. Optionally, the floating control may be set in a bottom area of the live streaming page.

In practical application, the display content of the information switching control is associated with an account to which the object display information displayed in the live streaming page corresponding to the first account belongs.

Alternatively, in response to the object information displayed in the live streaming page corresponding to the first account being the first object display information corresponding to the first account, the information switching control is a page switching control.

Herein, the page switching control displays at least one of the following information: account information, object information of the second recommended display object, and a preset interactive control corresponding to the second account; the page switching control is configured to trigger displaying, in the live streaming page corresponding to the first account, the second object display information corresponding to the second account.

Herein, the object information of the first recommended object may include the total number and real-time object explanation information of the second recommended display objects. The real-time object explanation information may be information representing a real-time explanation situation of the second account for the second recommended display object. According to the displayed real-time object explanation information, the second recommended display object currently being explained by the second account may be known. In practical application, the second object display information corresponding to the second account may be displayed in the live streaming page corresponding to the first account by inputting a trigger operation to the page switching control.

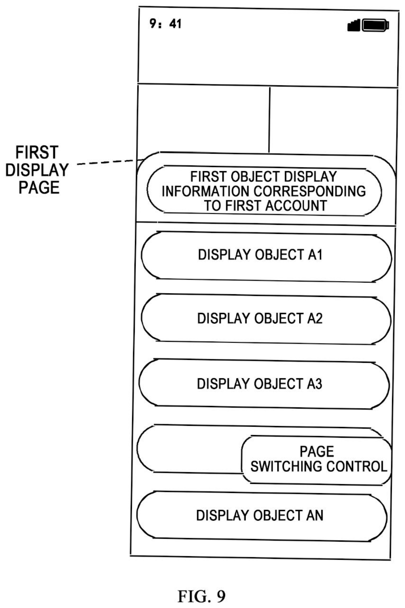

In practical application, in response to the object information displayed in the live streaming page corresponding to the first account being the first object display information corresponding to the first account. The information switching control displayed in the live streaming page may be a page switching control, and the page switching control may display at least one of the account information, the object information of the second recommended display object, and the preset interactive control corresponding to the second account. For example, as shown in FIG. 9, a schematic diagram of the page switching control is illustrated.

Further, in accordance with a detection of a trigger operation on the page switching control, the trigger operation may be responded, and the object display information displayed in the live streaming page corresponding to the first account may be switched from the first object display information corresponding to the first account to the second object display information corresponding to the second account. Meanwhile, the display content of the information switching control may be updated.

Alternatively, in response to the object information displayed in the live streaming page corresponding to the first account being the second object display information corresponding to the second account, the information switching control is a page return control; and the page return control is configured to trigger displaying of the first object display information corresponding to the first account in the live streaming page corresponding to the first account.

In the embodiments of the present disclosure, the first object display information corresponding to the first account may be displayed in the live streaming page corresponding to the first account by inputting a trigger operation to the page return control.

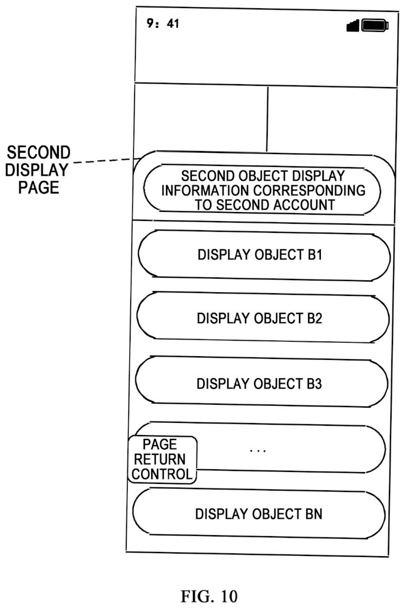

In practical application, in response to the object information displayed in the live streaming page corresponding to the first account being the second object display information corresponding to the second account, the information switching control displayed in the live streaming page is a page return control. For example, as shown in FIG. 10, a schematic diagram of the page return control is illustrated.

Further, in accordance with a detection of a trigger operation on the page return control, the trigger operation may be responded, the object display information displayed in the live streaming page corresponding to the first account may be switched from the second object display information corresponding to the second account to the first object display information corresponding to the first account. Meanwhile, the display content of the information switching control may be updated to update the information switching control from the page return control to the page switching control.

In practical application, when the first object display information corresponding to the first account is displayed in the live streaming page corresponding to the first account, in accordance with a detection of a sliding trigger operation on the first display page, the sliding trigger operation may be responded, and the first object display information displayed in the first display page is slid in a preset direction, so that the user may browse the displayed first object display information. In order to avoid a situation where the object display information is covered by the page switching control during the process of the user browsing the first object display information, the display state of the page switching control may be updated according to the state of the first display page.

Based on this, the method further includes: in accordance with a detection that the first display page is in a sliding state, adjusting the display state of the page switching control to a first display state; and in accordance with a detection that the first display page is in a non-sliding state, adjusting the display state of the page switching control to a second display state.

Herein, the control display length corresponding to the first display state is less than the control display length corresponding to the second display state.

In practical application, in accordance with a detection that the first display page is in the sliding state, the display state of the page switching control may be adjusted to the first display state, so that the control display length of the page switching control is shortened. In accordance with a detection that the first display page is in the non-sliding state, the display state of the page switching control may be adjusted to the second display state, so that the control display length of the page switching control is increased.

In the embodiments of the present disclosure, the second operation may also be a page sliding operation, that is, sliding the first display page in a preset direction until sliding to a preset position or a sliding distance meets a preset threshold.

Herein, the preset direction may be understood as a preset display page switching direction. The preset direction may be any direction, optionally, the preset direction may include a sliding direction such as from top to bottom, from bottom to top, from left to right, or from right to left. The preset position may be a preset page sliding end point position. Optionally, the preset position may be a position corresponding to any display page being completely displayed in the live streaming page corresponding to the first account. The preset threshold may be a preset maximum sliding distance.

In practical application, the display page displayed in the live streaming page corresponding to the first account may be set to a triggerable sliding state in advance, so that the display page may slide in the preset direction. Further, when the first object display information corresponding to the first account is displayed in the live streaming page corresponding to the first account. That is, when the live streaming page includes the first display page, a sliding trigger operation may be input to the first display page, so that the first display page slides in the preset direction. Further, in accordance with a detection that the first display page slides to the preset position or the sliding distance meets the preset threshold, the object display information displayed in the live streaming page corresponding to the first account may be switched from the first object display information corresponding to the first account to the second object display information corresponding to the second account.

It should be noted that, during the process of sliding the first display page in the preset direction, the display state of the first display page may be switched from a complete display state to a partial display state or a hidden display state. At this time, the display state of the second display page adjacent to the first display page may be switched from the partial display state or the hidden display state to the complete display state.

According to the subject matter of the embodiments of the present disclosure, a live streaming page corresponding to a first account is displayed. Further, in response to a first operation, first object display information corresponding to the first account is displayed in the live streaming page corresponding to the first account. Finally, in response to a second operation, the first object display information corresponding to the first account displayed in the live streaming page corresponding to the first account is switched to second object display information corresponding to a second account, to achieve the effect of visually displaying recommended objects associated with the live streaming room. Then, the effect of viewing the recommended objects associated with the interacting live streaming rooms in the current live streaming room is realized. The effect of switching the item display lists associated with multi-live streaming rooms in a single live streaming room is achieved. The switching step of the item display lists is simplified, and the use experience of the user is improved.

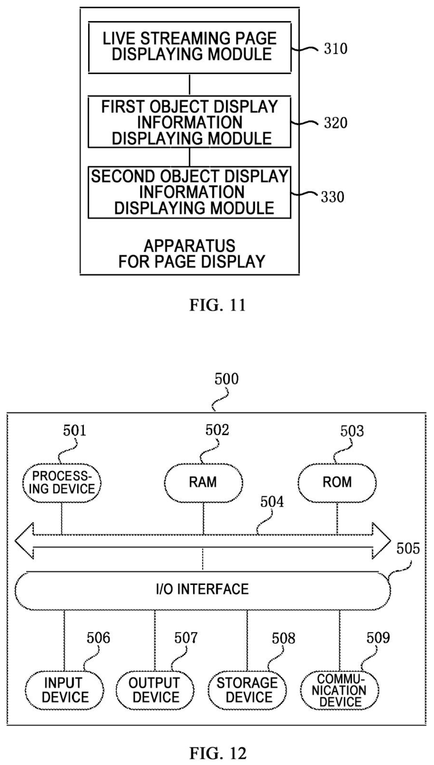

FIG. 11 illustrates a schematic structural diagram of an apparatus for page display according to embodiments of the present disclosure, as shown in FIG. 11, the apparatus includes: a live streaming page displaying module 310, a first object display information displaying module 320 and a second object display information displaying module 330.

Herein, the live streaming page displaying module 310 is configured to display, in response to a first operation, first object display information corresponding to the first account in the live streaming page corresponding to the first account, where, the first object display information includes at least one first recommended display object corresponding to the first account; the first object display information displaying module 320 is configured to display, in response to a first operation, first object display information corresponding to the first account in the live streaming page corresponding to the first account, where, the first object display information includes at least one first recommended display object corresponding to the first account; and the second object display information displaying module 330 is configured to display, in response to a second operation, second object display information corresponding to the second account in the live streaming page corresponding to the first account, where, the second object display information includes at least one second recommended display object corresponding to the second account.

Based on the foregoing subject matters, the second object display information displaying module 330 includes a display information switching component.

The display information switching component is configured to switch, in response to the second operation, the first object display information corresponding to the first account displayed in the live streaming page corresponding to the first account to second object display information corresponding to the second account; where, the first object display information corresponding to the first account is displayed via a first display page that is displayed in the live streaming page corresponding to the first account; the second object display information corresponding to the second account is displayed via a second display page that is displayed in a live streaming page corresponding to the second account.

Based on the foregoing subject matters, the live streaming page corresponding to the first account includes an information switching control.

Correspondingly, the display information switching component is specifically configured to switch, in response to a trigger operation on the information switching control, the first object display information corresponding to the first account displayed in the live streaming page corresponding to the first account to the second object display information corresponding to the second account.

Based on the foregoing subject matters, the first display page and/or the second display page further includes the information switching control, and the information switching control includes: a first preset control for triggering displaying of the first object display information corresponding to the first account in the live streaming page corresponding to the first account, and a second preset control for triggering displaying of the second object display information corresponding to the second account in the live streaming page corresponding to the first account.

In response to object information displayed in the live streaming page corresponding to the first account being the first object display information corresponding to the first account, the first preset control displays account information, attribute information, and a preset interaction control corresponding to the first account, and the second preset control displays account information and a switching button corresponding to the second account.

In response to object information displayed in the live streaming page corresponding to the first account being the second object display information corresponding to the second account, the second preset control displays account information, attribute information, and a preset interaction control corresponding to the second account, and the first preset control displays account information and a switching button corresponding to the first account.

Based on the foregoing subject matters, the information switching control is set in a display area adjacent to a page of the first display page and the second display page in the live streaming page corresponding to the first account.

The information switching control displays: a user identifier of the first account for triggering displaying of the first object display information corresponding to the first account in the live streaming page corresponding to the first account, and a user identifier of the second account for triggering displaying of second object display information corresponding to the second account in the live streaming page corresponding to the first account.

In response to object information displayed in the live streaming page corresponding to the first account being the first object display information corresponding to the first account, a display state of the user identifier of the first account is a first state and a display state of the user identifier of the second account is a second state.

In response to object information displayed in the live streaming page corresponding to the first account being the second object display information corresponding to the second account, a display state of the user identifier of the first account is the second state and a display state of the user identifier of the second account is the first state.

Based on the foregoing subject matters, the information switching control is a floating control.

In response to object information displayed in the live streaming page corresponding to the first account being the first object display information corresponding to the first account, the information switching control is a page switching control, and the page switching control displays at least one of the following information: account information, object information of the second recommended display object, and a preset interactive control corresponding to the second account; the page switching control is configured to trigger displaying of the second object display information corresponding to the second account in the live streaming page corresponding to the first account.

In response to object information displayed in the live streaming page corresponding to the first account being the second object display information corresponding to the second account, the information switching control is a page return control configured to trigger displaying of the first object display information corresponding to the first account in the live streaming page corresponding to the first account.

Based on the foregoing subject matters, the apparatus further includes: a first display state adjusting module and a second display state adjusting module.

The first display state adjusting module is configured to adjust a display state of the page switching control to a first display state in accordance with a detection that the first display page is in a sliding state.

The second display state adjusting module is configured to adjust a display state of the page switching control to a second display state in accordance with a detection that the first display page is in a non-sliding state; where, a control display length corresponding to the first display state is less than a control display length corresponding to the second display state.

Based on the foregoing subject matters, the second operation is sliding the first display page in a preset direction until sliding to a preset position or a sliding distance meets a preset threshold.

According to the subject matter of the embodiments of the present disclosure, a live streaming page corresponding to a first account is displayed. Further, in response to a first operation, first object display information corresponding to the first account is displayed in the live streaming page corresponding to the first account. Finally, in response to a second operation, second object display information corresponding to a second account is displayed in the live streaming page corresponding to the first account. In this way, the following issues can be solved: in the related technology, the users can only view items live streamed by the current live streaming user, which is difficult to satisfy the user demands; and in the live streaming process of the live streaming user, it lacks interactivity with live streaming users of other live streaming rooms. By solving those issues, it enables the mutual exchange of recommended objects between a plurality of live streaming rooms, so that the technical effect of improving service conversion rate is achieved

The apparatus for page display provided by the embodiments of the present disclosure may perform the method of page display provided by any embodiment of the present disclosure, and has corresponding functional modules for performing method and corresponding beneficial effects.

It should be noted that the components and modules included in the foregoing apparatus are only divided according to the function logic, but are not limited to the foregoing division, as long as the corresponding functions can be implemented; in addition, the specific names of the functional components are merely for ease of distinguishing, and are not intended to limit the protection scope of the embodiments of the present disclosure.

FIG. 12 illustrates a schematic structural diagram of an electronic device according to embodiments of the present disclosure. With reference to FIG. 12 below, FIG. 12 illustrates a schematic structural diagram of an electronic device (such as the terminal device or server in FIG. 12) suitable for implementing the embodiments of the present disclosure. The terminal device in the embodiments of the present disclosure may include, but not limited to, mobile terminal(s) such as a mobile phone, a notebook computer, a digital broadcast receiver, a PDA (Personal Digital Assistant), a PAD (tablet computer), a PMP (Portable Multimedia Player), an in-vehicle terminal (for example, an in-vehicle navigation terminal), and fixed terminal(s) such as a digital TV, a desktop computer, or the like. The electronic device shown in FIG. 12 is merely an example, and should not bring any limitation to the functions and use scope of the embodiments of the present disclosure.

As shown in FIG. 12, the electronic device 500 may include a processing device (for example, a central processing unit, a graphics processor, and the like ) 501, which may perform various appropriate actions and processing according to programs stored in a read-only memory (ROM) 502 or programs loaded into a random access memory (RAM) 503 from a storage device 508. In the RAM 503, various programs and data required by the operation of the electronic device 500 are also stored. The processing device 501, the ROM 502, and the RAM 503 are connected to each other via a bus 504. An input/output (I/O) interface 505 is also connected to the bus 504.

Generally, the following devices may be connected to the I/O interface 505: an input device 506 including, for example, a touch screen, a touchpad, a keyboard, a mouse, a camera, a microphone, an accelerometer, a gyroscope, and the like; an output device 507 including, for example, a liquid crystal display (LCD), a speaker, a vibrator, and the like ; a storage device 508 including, for example, a magnetic tape, a hard disk, and the like; and a communication device 509. The communication device 509 may allow the electronic device 500 to communicate wirelessly or wired with other devices to exchange data. While FIG. 12 shows an electronic device 500 having various devices, it should be understood that it is not required to implement or have all illustrated devices. More or fewer devices may alternatively be implemented or provided with.

In particular, according to the embodiments of the present disclosure, the process described above with reference to the flowchart may be implemented as computer software programs. For example, the embodiments of the present disclosure include a computer program product including computer programs embodied on a non-transitory computer readable medium, the computer programs including program codes for performing the method shown in the flowchart. In such embodiments, the computer programs may be downloaded and installed from the network by the communication device 509, or installed from the storage device 508, or installed from the ROM 502. When the computer programs are executed by the processing device 501, the foregoing functions defined in the method of the embodiments of the present disclosure are performed.

The names of messages or information exchanged between a plurality of devices in the embodiments of the present disclosure are only for the purpose of example and not intended to limit the scope of such messages or information.

The electronic device provided by the embodiments of the present disclosure and the method of page display provided in the above embodiments belong to the same inventive concept, technical details not described in detail in this embodiment may refer to the foregoing embodiments, and this embodiment has the same beneficial effects as the foregoing embodiments.

An embodiment of the present disclosure provides a computer storage medium having a computer program stored thereon, the programs, when executed by a processor, implement the method of page display provided in the foregoing embodiments.

It should be noted that the computer-readable medium described above may be a computer readable signal medium, a computer-readable storage medium, or any combination thereof. The computer-readable storage medium may be, for example, but not limited to, an electrical, magnetic, optical, electromagnetic, infrared, or semiconductor system, device, or components, or any combination thereof. More specific examples of the computer-readable storage media may include, but not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing programs that may be used by or in connection with an instruction execution system, apparatus, or components. In the present disclosure, the computer readable-signal medium may include data signals propagated in baseband or as part of a carrier, where the computer readable program codes are carried. Such propagated data signals may take a variety of forms including, but not limited to, electromagnetic signals, optical signals, or any suitable combination thereof. The computer readable-signal medium may also be any computer readable medium other than the computer readable storage medium, which may send, propagate, or transmit programs for being used by or in connection with an instruction execution system, apparatus, or components. The program codes embodied on the computer-readable medium may be transmitted with any suitable medium, including, but not limited to: wires, optical cables, RF (radio frequency), and the like, or any suitable combination thereof.

In some implementations, a client may communicate with a server using any currently known or future developed network protocol, such as HTTP (Hypertext Transfer Protocol), and may be interconnected with any form or medium of digital data communication (e.g., a communication network). Examples of the communication network include local area networks ("LANs"), wide area networks ("WANs"), internets (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer-readable medium carries one or more programs, and when the one or more programs are executed by the electronic device, the electronic device is caused to:
display a live streaming page corresponding to a first account, where, the live streaming page includes a live video stream corresponding to the first account and a live video stream stream corresponding to at least one second account, and the first account and the second account are in a connected state;
display, in response to a first operation, first object display information corresponding to the first account in the live streaming page corresponding to the first account, where, the first object display information includes at least one first recommended display object corresponding to the first account;
display, in response to a second operation, second object display information corresponding to the second account in the live streaming page corresponding to the first account, where, the second object display information includes at least one second recommended display object corresponding to the second account.

Computer program codes for performing the operations of the present disclosure may be written in one or more programming languages, including, but not limited to, object oriented programming languages such as Java, Smalltalk, C + +, and conventional procedural programming languages, such as the "C" language or similar programming languages. The program code may execute entirely on a user computer, partially on a user computer, as a stand-alone software package, partially on a user computer and partially on a remote computer, or entirely on a remote computer or server. In the case of a remote computer, the remote computer may be connected to the user computer via any kind of network, including a local area network (LAN) or a wide area network (WAN), or may be connected to an external computer (e.g., connected via the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of codes that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in reverse order, depending on the functionality involved. It is also noted that each block as well as their combinations in the block diagrams and/or flowcharts may be implemented with a dedicated hardware-based system that performs the specified functions or operations, or may be implemented in a combination of dedicated hardware and computer instructions.

The above description is merely an illustration of the preferred embodiments of the present disclosure and the principles of the applied technology. It should be understood by those skilled in the art that the disclosure in the present disclosure is not limited to the subject matters of the specific combination of the above technical features, and should also cover other subject matters formed by any combination of the above technical features or their equivalent features without departing from the above disclosed concept. For example, the above features are the subject matters formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. On the contrary, the various features described in the context of a single embodiment may also be implemented in a plurality of embodiments either individually or in any suitable subcombination.

Although the present subject matter has been described in language specific to structural features and/or methodological acts, it is to be understood that the subject matter defined in the appended claims is not necessarily limited to the specific features or actions described above. Rather, the specific features and actions described above are merely example forms for implementing the claims.

## Claims

1. A method of page display, comprising:
displaying a live streaming page corresponding to a first account, wherein, the live streaming page comprises a live video stream corresponding to the first account and a live video stream stream corresponding to at least one second account, and the first account and the second account are in a connected state;
displaying, in response to a first operation, first object display information corresponding to the first account in the live streaming page corresponding to the first account, wherein, the first object display information comprises at least one first recommended display object corresponding to the first account;
displaying, in response to a second operation, second object display information corresponding to the second account in the live streaming page corresponding to the first account, wherein, the second object display information comprises at least one second recommended display object corresponding to the second account.

2. The method according to claim 1, wherein, displaying second object display information corresponding to the second account in the live streaming page corresponding to the first account in response to a second operation comprises:
switching, in response to the second operation, the first object display information corresponding to the first account displayed in the live streaming page corresponding to the first account to second object display information corresponding to the second account;
wherein, the first object display information corresponding to the first account is displayed via a first display page that is displayed in the live streaming page corresponding to the first account; the second object display information corresponding to the second account is displayed via a second display page that is displayed in a live streaming page corresponding to the second account.

3. The method according to claim 2, wherein, the live streaming page corresponding to the first account comprises an information switching control; and the switching the first object display information corresponding to the first account displayed in the live streaming page corresponding to the first account to second object display information corresponding to the second account in response to the second operation comprises:
switching, in response to a trigger operation on the information switching control, the first object display information corresponding to the first account displayed in the live streaming page corresponding to the first account to the second object display information corresponding to the second account.

4. The method according to claim 3, wherein, the first display page and/or the second display page further comprises the information switching control, the information switching control comprises: a first preset control for triggering displaying of the first object display information corresponding to the first account in the live streaming page corresponding to the first account, and a second preset control for triggering displaying of the second object display information corresponding to the second account in the live streaming page corresponding to the first account;
in response to object information displayed in the live streaming page corresponding to the first account being the first object display information corresponding to the first account, the first preset control displays account information, attribute information, and a preset interaction control corresponding to the first account, and the second preset control displays account information and a switching button corresponding to the second account;
in response to object information displayed in the live streaming page corresponding to the first account being the second object display information corresponding to the second account, the second preset control displays account information, attribute information, and a preset interaction control corresponding to the second account, and the first preset control displays account information and a switching button corresponding to the first account.

5. The method according to claim 3, wherein, the information switching control is set in a display area adjacent to a page of the first display page and the second display page in the live streaming page corresponding to the first account;
the information switching control displays: a user identifier of the first account for triggering displaying of the first object display information corresponding to the first account in the live streaming page corresponding to the first account, and a user identifier of the second account for triggering displaying of second object display information corresponding to the second account in the live streaming page corresponding to the first account;
in response to object information displayed in the live streaming page corresponding to the first account being the first object display information corresponding to the first account, a display state of the user identifier of the first account is a first state and a display state of the user identifier of the second account is a second state;
in response to object information displayed in the live streaming page corresponding to the first account being the second object display information corresponding to the second account, a display state of the user identifier of the first account is the second state and a display state of the user identifier of the second account is the first state.

6. The method according to claim 3, wherein, the information switching control is a floating control;
in response to object information displayed in the live streaming page corresponding to the first account being the first object display information corresponding to the first account, the information switching control is a page switching control, and the page switching control displays at least one of the following information: account information, object information of the second recommended display object, and a preset interactive control corresponding to the second account; the page switching control is configured to trigger displaying of the second object display information corresponding to the second account in the live streaming page corresponding to the first account;
in response to object information displayed in the live streaming page corresponding to the first account being the second object display information corresponding to the second account, the information switching control is a page return control configured to trigger displaying of the first object display information corresponding to the first account in the live streaming page corresponding to the first account.

7. The method according to claim 6, wherein, the method further comprises:
adjusting a display state of the page switching control to a first display state in accordance with a detection that the first display page is in a sliding state;
adjusting a display state of the page switching control to a second display state in accordance with a detection that the first display page is in a non-sliding state;
wherein, a control display length corresponding to the first display state is less than a control display length corresponding to the second display state.

8. The method according to claim 2, wherein, the second operation is sliding the first display page in a preset direction until sliding to a preset position or a sliding distance meets a preset threshold.

9. An apparatus for page display, comprising:
a live streaming page displaying module configured to display a live streaming page corresponding to a first account, wherein, the live streaming page comprises a live video stream corresponding to the first account and a live video stream stream corresponding to at least one second account, and the first account and the second account are in a connected state;
a first object display information displaying module configured to display, in response to a first operation, first object display information corresponding to the first account in the live streaming page corresponding to the first account, wherein, the first object display information comprises at least one first recommended display object corresponding to the first account;
a second object display information displaying module configured to display, in response to a second operation, second object display information corresponding to the second account in the live streaming page corresponding to the first account, wherein, the second object display information comprises at least one second recommended display object corresponding to the second account.

10. An electronic device, the electronic device comprising:
one or more processors;
a storage device, configured to store one or more programs;
when the one or more programs are executed by the one or more processors, causing the one or more processors to implement the method of page display according to any of claims 1 to 8.

11. A storage medium comprising computer-executable instructions, the computer-executable instructions, when executed by a computer processor, implementing the method of page display according to any of claims 1 to 8.
